(19) Europäisches Patentamt
European Patent Office
Office européen des brevets

(11) Veröffentlichungsnummer : **0 377 120 B1**

(12) # EUROPÄISCHE PATENTSCHRIFT

(45) Veröffentlichungstag der Patentschrift : **11.11.92 Patentblatt 92/46**

(51) Int. Cl.$^5$ : **A01N 39/00,** A01N 33/12, // (A01N39/00, 39:00, 33:12)

(21) Anmeldenummer : **89122107.9**

(22) Anmeldetag : **30.11.89**

(54) **Desinfektionsmittel.**

(30) Priorität : **04.01.89 DE 3900102**

(43) Veröffentlichungstag der Anmeldung : **11.07.90 Patentblatt 90/28**

(45) Bekanntmachung des Hinweises auf die Patenterteilung : **11.11.92 Patentblatt 92/46**

(84) Benannte Vertragsstaaten : **AT CH DE ES FR GB IT LI NL SE**

(56) Entgegenhaltungen :
**DE-A- 2 711 577**
**GB-A- 1 452 374**
**US-A- 2 786 797**

(56) Entgegenhaltungen :
**CHEMICAL & PHARMACEUTICAL BULLETIN, Band 34, Nr. 10, Oktober 1986, Seiten 4215-4224, Pharmaceutical Society of Japan,-Tokyo, JP; K. JONO et al.: "Effect of alkyl chain length of benzalkonium chloride on the bactericidal activity and binding toorganic materials"**

(73) Patentinhaber : **INTERCHEM AG**
**Graben 5**
**CH-6300 Zug (CH)**

(72) Erfinder : **Schulthess, Hermann**
**Via S. Gottardo 138**
**I-6648 Minusio (IT)**

(74) Vertreter : **Weber, Dieter, Dr. et al**
**Dr. Dieter Weber und Dipl.-Phys. Klaus Seiffert**
**Patentanwälte Gustav-Freytag-Strasse 25**
**Postfach 6145**
**W-6200 Wiesbaden 1 (DE)**

**EP 0 377 120 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Es ist bekannt, daß quaternäre Benzylammoniumchloride mit einer langen Molekülkette keimtötende, bakterizide und fungizide Wirksamkeit besitzen. So wird beispielsweise Benzyldimethyl-octylammoniumchlorid zum Desinfizieren chirurgischer Instrumente, zur Raumdesinfektion und zur Desinfektion im landwirtschaftlichen Tierbereich verwendet. Dieses Benzylammoniumchlorid ist jedoch verhältnismäßig toxisch und wird der Giftklasse 4 zugerechnet. Außerdem verursacht es relativ starke Haut- und Augenreizung, was insbesondere für die Raumdesinfektion und die Desinfektion in landwirtschaftlichen Tierhaltungsbereich von Nachteil ist, wo Menschen oder Tiere zwangsläufig mit dem Desinfektionsmittel in Berührung kommen. In jedem Fall ist die Haut- und Augenreizung für das desinfizierende Bedienungspersonal schädlich.

Bekannt ist auch Benzyl-dimethyl-p-(1,1,3,3-tetramethylbutyl)-phenoxyethoxy-ethylammoniumchlorid. Auch dieses besitzt bekanntermaßen haut-, scheimhaut- und augenreizende Wirkung, so daß es die gleichen Nachteile wie Benzyl-dimethyl-octylammoniumchlorid hat.

Die der Erfindung zugrundeliegende Aufgabe bestand nun darin, die bekannte keimtötende Wirksamkeit quaternärer Ammoniumchloride auszunutzen, aber dabei ein Desinfektionsmittel zu bekommen, das ungiftig ist und keine Haut- und Schleimhautreizungen verursacht.

Zur Lösung dieser Aufgabe besteht erfindungsgemäß ein Desinfektionsmittel aus einer wäßrigen Lösung, enthaltend eine Kombination dreier Benzylammoniumchloride der allgemeinen Formeln

A)

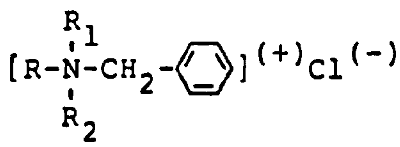

B)

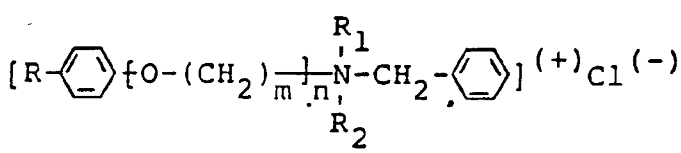

und

C)

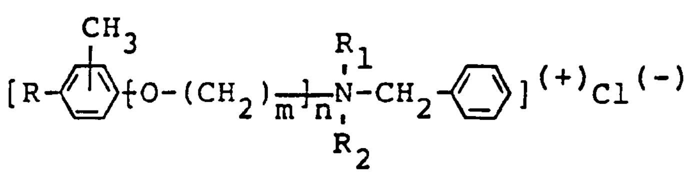

oder von deren Hydraten, worin R eine geradkettige oder verzweigtkettige Alkylgruppe mit 7 bis 18 Kohlenstoffatomen, $R_1$ und $R_2$ jeweils eine Alkylgruppe mit 1 bis 4 Kohlenstoffatomen und m und n unabhängig voneinander jeweils 1, 2 oder 3 bedeuten, im Mengenverhältnis von A : B : C = 1 : 0,2 bis 0,5 : 0,01 bis 0,05.

Solche Desinfektionsmittel sind geruchlos, bilden keine Flecken oder Rückstände auf den desinfizierten Gegenständen, lösen Blut auf und eignen sich daher gut zur Reinigung von ärztlichen Instrumenten und Gegenständen, sind chemisch stabil, bis 130 °C wirksam, schützen vor Rost und Korrosion und haben gute Materialverträglichkeit gegenüber Gummi, Glas, Kunststoff und Metallen. Besonders wichtig ist, daß sie in Giftklasse frei einzuordnen sind, keine Allergien erzeugen und keine Haut- und Schleimhautreizungen verursachen. Dies ist besonders überraschend, da Einzelkomponenten der angegebenen Formeln starke Haut- und Schleimhautreizungen verursachen und teilweise relativ giftig sind. Es war daher für den Fachmann nicht vorhersehbar, daß die erfindungsgemäße Kombination dreier Benzylammoniumchloride in speziellen Mengenverhältnissen diese Nachteile der einzelnen Verbindungen beseitigen würde.

Unter den Benzylammoniumchloriden der obigen Formeln sind bestimmte Verbindungen für die erfindungsgemäßen Desinfektionsmittel bevorzugt. Solche bevorzugten Benzylammoniumchloride sind solche, in

denen R eine verzweigtkettige oder geradkettige Alkylgruppe mit 7 bis 9, besonders mit 8 Kohlenstoffatomen bedeutet. In dem Benzylammoniumchlorid A ist R besonders bevorzugt eine n-Octylgruppe. In den Benzylammoniumchloriden B und C dagegen ist R bevorzugt eine verzweigte $C_8$-Alkylgruppe besonders, eine 1,1,3,3-Tetramethylbutylgruppe der Formel

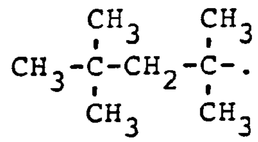

$R_1$ und $R_2$ können nach der obigen Definition unabhängig voneinander geradkettige oder verzweigtkettige Alkylgruppen mit 1 bis 4 Kohlenstoffatomen sein. Üblicherweise sind $R_1$ und $R_2$ in jeweils einer Verbindung identisch. Vorzugsweise handelt es sich um Methyl- oder Ethylgruppen, besonders um Methylgruppen. In der Verbindung C steht die $CH_3$-Gruppe im Ring vorzugsweise in ortho-Stellung zum Sauerstoffatom. m und n bedeuten bevorzugt die Zahl 2.

In einem besonders bevorzugten Desinfektionsmittel nach der Erfindung ist das Benzylammoniumchlorid A Benzyl-dimethyl-n-octyl-ammoniumchlorid, das Benzylammoniumchlorid B 1,1,3,3-Tetramethylbutylphenoxy-ethoxyethyl-dimethyl-benzylammoniumchlorid und das Benzylammoniumchlorid C 1,1,3,3-Tetramethylbutylcresoxy-ethoxyethyl-dimethyl-benzylammoniumchlorid. Diese Dreierkombination zeigt besonders hervorragende Effekte, insbesondere bezüglich der Haut- und Schleimhautverträglichkeit.

Bevorzugte Mengenverhältnisse der Benzylammoniumchloride in dem erfindungsgemäßen Desinfektionsmittel liegen bei oder nahe bei einem Verhältnis von A : B : C von etwa 1 : 0,3 : 0,025.

Die erfindungsgemäßen Desinfektionsmittel können in unterschiedlichen Konzentrationen hergestellt werden und in den Handel kommen. So können sie als gebrauchsfertige Lösungen oder als wäßrige Konzentrate hergestellt werden. Zweckmäßig liegen die Konzentrationen bei 8 bis 10 Gew.-% des Benzylammoniumchlorids A, bei 2 bis 4 Gew.-% des Benzylammoniumchlorids B und bei 0,1 bis 0,4 Gew.-% des Benzylammoniumchlorids C.

Weiterhin erwies es sich als günstig, zusätzlich in der wäßrigen Lösung ein Alkalinitrit, insbesondere Natriumnitrit, vorliegen zu haben. Dieses ist zweckmäßig in einem Gewichtsverhältnis zu A von 0,5 bis 1 : 1 enthalten. Konzentrationsmäßig liegt das Alkalinitrit zweckmäßig im Bereich von 3 bis 12, vorzugsweise 6 bis 9 Gew.-%.

Konzentrate mit den angegebenen Gewichtskonzentrationen der Komponenten A bis C und des Alkalinitrits können dann zu Gebrauchszwecken auf eine Konzentration von etwa 1 bis 5 Gew.-% verdünnt werden. 1 %ige Lösungen dieser Konzentrate sind bereits hoch wirksam. Die Löslichkeit in Wasser ist unbegrenzt.

Die Anwendungsmöglichkeiten der erfindungsgemäßen Desinfektionsmittel sind vielfältig. In Gaststätten können sie zur sanitären Reinigung von Geschirr und Gläsern, Bestecken und ähnlichen Utensilien verwendet werden, wo sie ein schnell wirksames keimtötendes Mittel mit Langzeitwirkung sind. Infolge ihrer Ungiftigkeit und fehlenden Haut- und Schleimhautreizung können sie in diesem Bereich unbedenklich eingesetzt werden.

Weiterhin können sie mit großem Vorteil zur Desinfektion und Geruchsbeseitigung in privaten und gewerblichen Räumen eingesetzt werden, wie in Krankenhäusern, gerucherzeugenden Gewerbebetrieben, landwirtschaftlichen Betrieben, Tierhaltungen, öffentlichten Verkehrsmitteln, wie Bussen, Zügen und Flugzeugen, im Veterinärbereich oder in Wäschereien. Die Tatsache, daß die Desinfektionsmittel nach der Erfindung geruchlos sind, überwindet auch Nachteile anderer bekannter Desinfektionsmittel besonders in öffentlichen Verkehrsmitteln, wo eine Desinfektion mit stark riechenden Mitteln zu erheblichen Belästungen führt.

Die erfindungsgemäßen Desinfektionsmittel haben ein breites Wirkungsspektrum gegen Keime jeglicher Art, wie Bakterien, Algen, Pilze usw. Sie sind chemisch stabil und ermöglichen daher eine Langzeitlagerung sowie eine desinfizierende Langzeitwirkung.

## Beispiel

Ein Konzentrat eines erfindungsgemäßen Desinfektions mittels wurde aus folgenden Bestandteilen durch Auflösen der nachfolgend genannten Verbindungen in Wasser hergestellt:

| | |
|---|---|
| n-Octyl-dimethyl-benzylammoniumchlorid | 9,75 Gew.-% |
| 1,1,3,3-Tetramethylbutylphenoxy-ethoxyethyl-dimethyl-benzylammoniumchlorid | 3,00 Gew.-% |
| 1,1,3,3-Tetramethylbutyl-o-cresoxy-ethoxy-ethyl-dimethyl-benzylammoniumchlorid | 0,25 Gew.-% |
| Natriumnitrit | 7,50 Gew.-% |
| Wasser | 79,50 Gew.-% |

Dieses Desinfektionsmittelkonzentrat wurde nach Verdünnung mit Wasser entsprechend den nachfolgenden Angaben hinsichtlich der Wirksamkeit untersucht. Der pH-Wert des Konzentrats lag bei 10,1, der pH-Wert einer 2 %igen Lösung bei 9,4 und der einer 1 %igen Lösung bei 9,1.

Das Desinfektionsmittel war absolut geruchlos und ungiftig. Es ergab bei der Anwendung weder Haut- noch Schleimhaautreizungen.

Die Prüfung der Eignung des Desinfektionsmittel zur Desinfektion von Inkubatoren erfolgte durch Keimzahlbestimmung mittels Rodacplatten. Dabei wurden die Testkeime aus einer Übernachtkultur von Mueller Hinton Bouillon (BBL 11443) in 0,9 %iger NaCl-Lösung suspendiert, so daß eine Konzentration von ca. $10^6$ Keimen pro Milliliter entstand. Mit einem einfachen Handsprayvernebler wurden die Lösungen in der Weise ausgesprayt, daß die Oberflächen von einem leichten sichtbaren Flüssigkeitsfilm benetzt waren. Anschließend wurden nach 5, 15, 30 und 60 min Abklatsche mit Rodacplatten, die zum Neutralisieren der quaternären Ammoniumbasen 3,0 % Tween 80 + 3 % Saponin + 0,1 % Histidin + 0,1 % Cystein in Trypticase-Soy-Agar (BBL 11043) enthielten, vorgenommen und nach Inkubation bei 37 °C die keimbildenden Einheiten (KBE) auf einer Fläche on 20 $cm^2$ bestimmt.

**Bakterienstämme**

| | | |
|---|---|---|
| Staphylococcus aureus | ATCC | 6538 |
| E. coli | ATCC | 11229 |
| Pseudomonas aeruginosa | ATCC | 15442 |
| Klebsiella pneumoniae | ATCC | 4352 |
| Candida albicans | ATCC | 10231 |

Ergebnis des Flächendesinfektionsversuchs im Inkubator

Testkeim : Staphylococcus aureus
Material: Plexiglas in Isolette

| Konzentration in % | Restkeimzahl nach n-Minuten Einwirkung | | | | |
|---|---|---|---|---|---|
| | 0 | 5 | 15 | 30 | 60 |
| 1,0 | $2,1 \times 10^3$ | 10 | KW | KW | KW |
| 2,0 | $2,3 \times 10^3$ | KW | KW | KW | KW |

Testkeim: E. Coli
Material: Plexiglas in Isolette

| Konzentration in % | Restkeimzahl nach n-Minuten Einwirkung | | | | |
|---|---|---|---|---|---|
| | 0 | 5 | 15 | 30 | 60 |
| 1,0 | $4,1 \times 10^3$ | 18 | KW | KW | KW |
| 2,0 | $3,9 \times 10^3$ | KW | KW | KW | KW |

Testkeim: Klebsiella pneumoniae
Material: Plexiglas in Isolette

| Konzentration in % | Restkeimzahl nach n-Minuten Einwirkung | | | | |
|---|---|---|---|---|---|
| | 0 | 5 | 15 | 30 | 60 |
| 1,0 | $5,0 \times 10^2$ | 12 | KW | KW | KW |
| 2,0 | 5,2 x 102 | 3 | KW | KW | KW |

Testkeim: Pseudomonas aeruginosa
Material: Plexiglas in Isolette

| Konzentration in % | Restkeimzahl nach n-Minuten Einwirkung | | | | |
|---|---|---|---|---|---|
| | 0 | 5 | 15 | 30 | 60 |
| 1,0 | $3,3 \times 10^3$ | 9 | KW | KW | KW |
| 2,0 | $3,1 \times 10^3$ | 2 | KW | KW | KW |

Testkeim: Candida albicans
Material: Plexiglas in Isolette

| Konzentration in % | Restkeimzahl nach n-Minuten Einwirkung | | | | |
|---|---|---|---|---|---|
| | 0 | 5 | 15 | 30 | 60 |
| 1,0 | $1 \times 10^3$ | 6 | KW | KW | KW |
| 2,0 | $0,9 \times 10^3$ | KW | KW | KW | KW |

KW = Kein Wachstum

Im weitern wurde das poröse Kunststoffkissen in der Isolette ebenfalls mit den gleichen Keimzahlen kontaminiert und nach Besprayen mit 1%-iger Barrycidallösung die KBE nach 5, 15 und 30 Minuten bestimmt. Mit Ausnahme von Staphylococcus aureus, bei dem nach 5 Minuten 14 und nach 15 Minuten noch 4 Keime nachgewiesen wurden, zeigten alle übrigen Keime schon nach 5 Minuten kein Wachstum mehr.

Ein Gemisch von allen Keimen zu gleichen Teilen in einer Totalkonzentration von ca. $10^6$ Keimen pro ml auf die Oberfläche der Isolette gebracht, zeigte nach Besprayen mit einer 1%-igen Lösung folgendes Resultat:

| | |
|---|---|
| 0 Minuten: | Rasen von Bakterien |
| 5 Minuten: | 28 Staph. aureus |
| | 8 Pseudomonas aeruginosa |
| | 4 E. Coli |
| 15 Minuten: | 1 Staph. aureus |
| | 2 Klebsiella pneumoniae |
| | 1 Pseudomonas aeruginosa |
| 30 Minuten: | Kein Wachstum von Keimen |

Die Versuche zeigen, daß bereits mit einer 1 %igen Lösung des erfindungsgemäßen Desinfektionsmittelkonzentrates innerhalb von 15 min keimarme Verhältnisse geschaffen werden können, die den Einsatz des Inkubators relativ schnell und gefahrlos wieder erlaubt. Das Mittel zeichnete sich zudem durch seine Geruchlosigkeit, die fehlende Irritation der Schleimhäute und die gute Materialverträglichkeit aus.

**Patentansprüche**

1. Desinfektionsmittel, bestehend aus einer wäßrigen Lösung enthaltend eine Kombination dreier Benzylammoniumchloride der allgemeinen Formeln

A)

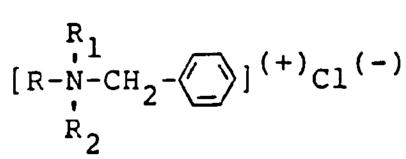

B)

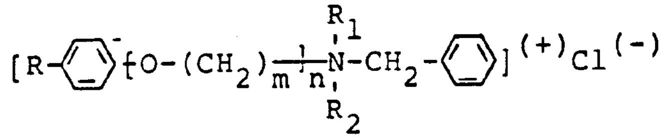

und

C)

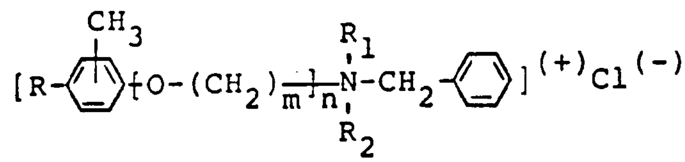

oder von deren Hydraten, worin R eine geradkettige oder verzweigtkettige Alkylgruppe mit 7 bis 18 Kohlenstoffatomen, $R_1$ und $R_2$ jeweils eine Alkylgruppe mit 1 bis 4 Kohlenstoffatomen und m und n unabhängig voneinander jeweils 1, 2 oder 3 bedeuten, im Mengenverhältnis von a : B : C = 1 : 0,2 bis 0,5 : 0,01 bis 0,05.

2. Desinfektionsmittel nach Anspruch 1, **dadurch gekennzeichnet,** daß R eine Alkylgruppe mit 7 bis 9 Kohlenstoffatomen, vorzugsweise eine $C_8$-Alkylgruppe ist, $R_1$ und $R_2$ jeweils eine Alkylgruppe mit 1 bis 2 Kohlenstoffatomen, vorzugsweise eine Methylgruppe bedeuten und m und n jeweils 2 sind.

3. Desinfektionsmittel nach Anspruch 1 oder 2, **dadurch gekennzeichnet,** daß in dem Benzylammoniumchlorid (A) R eine n-Octylgruppe bedeutet.

4. Desinfektionsmittel nach einem der Ansprüche 1 bis 3, **dadurch gekennzeichnet**, daß in den Benzylammoniumchloriden (B) und (C) R eine verzweigte $C_8$ Alkylgruppe, vorzugsweise eine 1,1,3,3-Tetramethylbutylgruppe bedeutet.

5. Desinfektionsmittel nach einem der Ansprüche 1 bis 4, **dadurch gekennzeichnet**, daß es die Benzylammoniumchloride in einem Mengenverhältnis von A : B : C von etwa 1 : 0,3 : 0,025 enthält.

6. Desinfektionsmittel nach einem der Ansprüche 1 bis 5, **dadurch gekennzeichnet**, daß es die Benzylammoniumchloride in einer Konzentration von 8 bis 10 Gew.-% A, 2 bis 4 Gew.-% B und 0,1 bis 0,4 Gew.-% C enthält.

7. Desinfektionsmittel nach einem der Ansprüche 1 bis 6, **dadurch gekennzeichnet**, daß es zusätzlich ein Alkalinitrit, vorzugsweise in einer Konzentration von 3 bis 12, besonders 6 bis 9 Gew.-% enthält.

## Claims

1. Disinfectant comprising an aqueous solution containing a combination of three benzyl ammonium chlorides of general formulas

A)

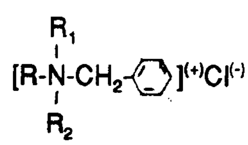

B)

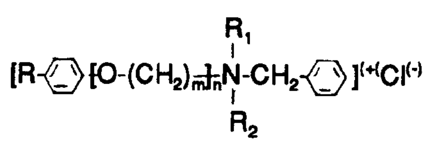

und

C)

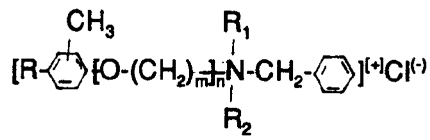

or the hydrates thereof, in which R is a straight or branched-chain alkyl group having 7 to 8 carbon atoms, $R_1$ and $R_2$ are in each case an alkyl group having 1 to 14 carbon atoms and m and n, independently of one another, are in each case 1, 2 or 3, in a quantity ratio of A : B : C of 1 : 0.2 to 0.5 : 0.01 to 0.05.

2. Disinfectant according to claim 1, **characterized in** that R is an alkyl group having 7 to 9 carbon atoms, preferably a $C_8$-alkyl group, $R_1$ and $R_2$ are in each case an alkyl group having 1 to 2 carbon atoms and preferably a methyl group and m and n are in each case 2.

3. Disinfectant according to claim 1 or 2, **characterized in** that R is an n-octyl group in the benzyl ammonium chloride (A).

4. Disinfectant according to one of the claims 1 to 3, **characterized in** that R is a branched $C_8$-alkyl group, preferably a 1,1,3,3-tetramethylbutyl group in the benzyl ammonium chlorides (B) and (C).

5. Disinfectant according to one of the claims 1 to 4, **characterized in** that it contains the benzyl ammonium chlorides in a weight ratio of A : B : C of approximately 1 : 0.3 : 0.025.

6. Disinfectant according to one of the claims 1 to 5, **characterized in** that it contains the benzyl ammonium chlorides in a concentration of 8 to 10 % by weight A, 2 to 4 % by weight B and 0.1 to 0.4 % by weight C.

7. Disinfectant according to one of the claims 1 to 6, **characterized in** that it additionally contains an alkali nitrite, preferably in a concentration of 3 to 12, particularly 6 to 9 % by weight.

## Revendications

1. Désinfectant, consistant en une solution aqueuse contenant une combinaison de trois chlorures de benzylammonium de formule générales:

A)

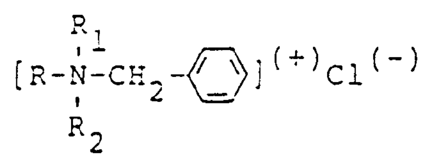

B)

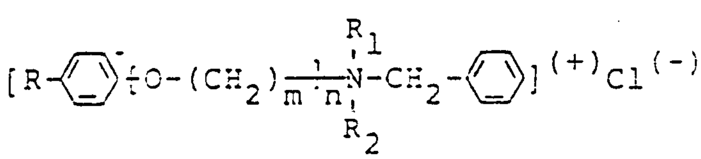

et

C)

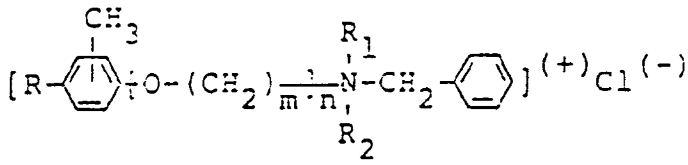

ou de leurs hydrates , dans lesquelles R représente un groupe alkyle linéaire ou ramifié ayant 7 à 18 atomes de carbone ; $R_1$ et $R_2$ représentent chacun un groupe alkyle ayant 1 à 4 atomes de carbone, et m et n valent chacun, indépendamment l'un de l'autre , 1 , 2 ou 3 ,selon un rapport entre les quantités de A:B:C = 1:0,2 à 0,5 : 0,01 à 0,05.

2. Désinfectant selon la revendication 1, caractérisé en ce que R représente un groupe alkyle ayant 7 à 9 atomes de carbone, avantageusement un groupe alkyle en $C_8$ ; $R_1$ et $R_2$ représentent chacun un groupe alkyle ayant 1 à 2 atomes de carbone, avantageusement un groupe méthyle, et m et n valent chacun 2.

3. Désinfectant selon la revendication 1 ou 2, caractérisé en ce que, dans le chlorure de benzylammonium (A), R représente un groupe n-octyle.

4. Désinfectant selon l'une des revendications 1 à 3, caractérisé en ce que, dans les chlorures de benzylammonium (B) et (C), R représente un groupe alkyle ramifié en $C_8$, avantageusement un groupe 1,1,3,3-tétraméthylbutyle.

5. Désinfectant selon l'une des revendications 1 à 4, caractérisé en ce qu'il contient les chlorures de benzylammonium en un rapport entre les quantités de A:B:C d'environ 1:0,3:0.0,025.

6. Désinfectant selon l'une des revendications 1 à 5 , caractérisé en ce qu'il contient les chlorures de benzylammonium en une concentration de 8 à 10 % en poids de A , 2 à 4 % en poids de B et 0,1 à 0,4 % en poids de C .

7. Désinfectant selon l'une des revendications 1 à 6 , caractérisé en ce qu'il contient en outre un nitrite alcalin , de préférence en une concentration de 3 a 12, en particulier 6 à 9, % en poids.